# EUROPÄISCHE PATENTSCHRIFT

(11) **EP 0 641 949 B1**
(45) Veröffentlichungstag und Bekanntmachung des Hinweises auf die Patenterteilung: **28.05.1997**
(21) Anmeldenummer: 94113761.4
(22) Anmeldetag: 02.09.1994
(51) Int. Cl.: F16D 55/224, F16D 65/095

(54) **Scheibenbremse**
Disc brake
Frein à disque

(30) Priorität: 02.09.1993 DE 4329675; 21.12.1993 DE 4343737
(43) Veröffentlichungstag der Anmeldung: 08.03.1995
(73) Patentinhaber: PERROT BREMSEN GmbH, D-68229 Mannheim (DE)
(72) Erfinder: Antony, Paul, D-67550 Worms (DE); Falter, Wolfgang, D-69118 Heidelberg (DE); Kiessig, Andreas, D-04249 Leipzig (DE); Berg, Matthias, D-69198 Schriesheim (DE)
(74) Vertreter: Patentanwälte Leinweber & Zimmermann

(56) Entgegenhaltungen:
- DE-A- 1 953 285
- DE-A- 2 211 013
- DE-A- 2 514 383
- DE-A- 3 635 828
- DE-B- 1 204 084
- FR-A- 2 322 300
- GB-A- 2 030 666
- GB-A- 2 163 820

## Beschreibung

Die Erfindung betrifft eine Scheibenbremse mit einem Bremsträger, einer Bremsscheibe, einer betätigungsseitigen Bremsbacke, einer felgenseitigen Bremsbacke, einem in Richtung axial zur Bremsscheibe verschieblich an dem Bremsträger gehaltenen und die Bremsscheibe mit einem felgenseitigen Sattelschenkel übergreifenden Bremssattel, einer die felgenseitige Bremsbacke gegen Mitdrehen mit der Bremsscheibe sichernden Einrichtung zum Abstützen der felgenseitigen Bremsbacke an dem Bremsträger, einer die betätigungsseitige Bremsbacke gegen Mitdrehen mit der Bremsscheibe sichernden Einrichtung zum Abstützen der betätigungsseitigen Bremsbacke an dem Bremsträger und einer den felgenseitigen Sattelschenkel gegen Mitdrehen mit der Bremsscheibe sichernden Einrichtung zum Abstützen des Sattelschenkels an dem Bremsträger.

Wird eine solche Scheibenbremse bei gegebener Drehrichtung der Bremsscheibe betätigt, so neigt der Bremssattel felgenseitig dazu, sich infolge der einsetzenden Bremsumfangskräfte und der daraus resultierenden Bremsträgerverformung mit dem zugeordneten Bremsbelag in Richtung der Scheibenauslaufseite zu bewegen, wo sich der Bremsbelag gegen den Bremsträger abstützt. Durch diese Sattelschrägstellung wird die Bremsbacke auslaufseitig höher belastet, was zur Folge hat, daß ein tangentialer Schrägverschleiß auf dieser Seite auftritt. Ferner wirken durch die Sattelschrägstellung Kräfte und insbesondere Momente auf die Halterung des Bremssattels an dem Bremsträger, wodurch die Gefahr des Verklemmens besteht. Betätigungsseitig dreht sich hingegen die Bremsbacke um die Backenabstützung auf der Scheibenauslaufseite, so daß sich hier ein tangentialer Schrägverschleiß scheibeneinlaufseitig einstellt.

Die DE 29 19 548 C2 zeigt in den Fig. 1 und 6 eine felgenseitige Abstützung für den Bremssattel und die Bremsbacken gegenüber dem Bremsträger. Diese Abstützung erfolgt jedoch generell sowohl für die Bremsbacken als auch für den Bremssattel auf der Scheibenauslaufseite. Somit wirken sämtliche Bremsumfangskräfte einseitig - und daher deformierend - auf den Trägerarm ein, wodurch Sattelschrägstellungen gegenüber dem felgenseitigen Bremsbelag und gegenüber der als Halterung dienenden Bolzenführung nicht vermieden werden.

Bei der Gleitsattel-Scheibenbremse nach der DE-OS 23 26 047 dienen als Bolzenführungen ausgestaltete Halterungen des Bremssattels an dem Bremsträger dazu, die auftretenden Bremsumfangskräfte aufzunehmen. Die Bolzenführungen übergreifen dabei den Bremsscheibenumfang. Bei diesem Aufbau besteht die Gefahr, daß sich die Bolzen verformen und damit die axiale Gleitfähigkeit des Sattels beeinträchtigen.

Die DE 27 50 337 C2 zeigt eine Teilbelagsscheibenbremse, bei der die tangentiale und radiale Sattelführung als die Bremsscheibe übergreifende "Prismenführungen" ausgeführt ist. Bei Prismenführungen ist eine sehr große Maßhaltigkeit erforderlich, damit ein Verklemmen ausgeschlossen ist. Die felgenseitige Bremsbacke ist am felgenseitigen Sattelschenkel befestigt und scheibenauslaufseitig an der Bremssattel-Führung (Prismenführung) am Bremsträger abgestützt. Der Sattelschenkel hintergreift dabei scheibeneinlaufseitig den Bremsträger gemäß dem dortigen Anspruch 1 "formschlüssig". Nach der Aufgabenstellung sollen aus Festigkeitsgründen hierdurch die felgenseitigen Umfangskräfte der Bremsbacke halbiert und somit gleichzeitig auf die Ein- und die Auslaufseite des Bremsträgers übertragen werden. Diese Lösung ist in der Praxis aber nicht befriedigend, weil durch Herstellungstoleranzen die gleichmäßige Kräfteaufteilung kaum zu realisieren ist. Entweder stützt sich nämlich der Sattelschenkel mit Bremsbacke nur scheibeneinlaufseitig oder nur scheibenauslaufseitig ab, so daß eine Sattelschrägstellung - und somit tangentialer Schrägverschleiß - nicht vermieden werden kann.

Der Erfindung liegt die Aufgabe zugrunde, eine Scheibenbremse der eingangs genannten Art derart weiterzubilden, daß der Schrägverschleiß minimiert ist.

Erfindungsgemäß wird die gestellte Aufgabe dadurch gelöst, daß die felgenseitige Bremsbacke und der felgenseitige Sattelschenkel gegeneinander in einer Ebene parallel zur Bremsscheibe verschieblich sind und die Drehsicherungseinrichtung für die felgenseitige Bremsbacke die felgenseitige Bremsbacke nur auf der Scheibenauslaufseite des Trägers abstützt, wohingegen die Drehsicherungseinrichtung für den felgenseitigen Sattelschenkel den felgenseitigen Sattelschenkel nur auf der Scheibeneinlaufseite des Bremsträgers abstützt.

Der Erfindung liegt die verblüffend einfache Erkenntnis zugrunde, daß eine effektive Verteilung der auf die Bremsbacke einerseits und den Bremssattel andererseits wirkenden Bremsumfangkräfte auf die Bremsscheibenauslaufseite einerseits und die Bremsscheibeneinlaufseite andererseits des Bremsträgers nur dann gewährleistet ist, wenn Bremsbacke und Bremssattel voneinander "entkoppelt" sind und sich jeweils nur auf der entsprechenden Seite des Bremsträgers abstützen. Durch diese Verteilung der Bremsumfangkräfte auf die beiden Seiten des Bremsträgers sind die zu Schrägverschleiß führenden Schrägstellungen und Verformungen zuverlässig unterbunden.

Nach einer besonders bevorzugten Ausführungsform der Erfindung stützt die Drehsicherungseinrichtung für die betätigungsseitige Bremsbacke die betätigungsseitige Bremsbacke nur auf der Scheibenauslaufseite des Bremsträgers ab. Dabei wird davon ausgegangen, daß die zwischen dem Bremssattel und der betätigungsseitigen Bremsbacke liegende Betätigungseinrichtung den Bremssattel und die betätigungsseitige Bremsbacke im Sinne eines gegenseitigen Verdrehens in einer Ebene parallel zur Bremsscheibe ausreichend "entkoppelt". Sollte dies nicht der Fall sein, kann eine entsprechende (zusätzliche) Entkoppelung vorgesehen sein.

Nach einer weiter bevorzugten Ausführungsform der Erfindung dient eine Druckplatte dem Drücken der betätigungsseitigen Bremsbacke gegen die Bremsscheibe, wobei eine die Druckplatte gegen Mitdrehen mit der Bremsscheibe sichernde Einrichtung zum Abstützen der Druckplatte an dem Bremsträger vorgesehen ist und die Drehsicherungseinrichtung für die Druckplatte die Druckplatte nur auf der Scheibeneinlaufseite des Bremsträgers abstützt. In diesem Fall werden also wiederum die auf die Druckplatte wirkenden Bremsumfangskräfte auf der Scheibeneinlaufseite des Bremsträgers aufgenommen, während die auf die betätigungsseitige Bremsbacke wirkenden Bremsumfangskräfte auf der Bremsscheibenauslaufseite des Bremsträgers aufgenommen werden.

Bevorzugt ist es, daß die Druckplatte gegenüber der betätigungsseitigen Bremsbacke in einer Ebene parallel zur Bremsscheibe verschieblich ist. Dadurch ist es möglich, die auf die Druckplatte wirkenden Bremsumfangskräfte auf der Scheibeneinlaufseite des Bremsträgers aufzunehmen, während die auf die betätigungsseitige Bremsbacke wirkenden Bremsumfangskräfte auf der Bremsscheibenauslaufseite des Bremsträgers aufgenommen werden.

Alternativ dazu kann aber auch vorgesehen sein, daß die Druckplatte und die betätigungsseitige Bremsbacke nicht in einer Ebene parallel zur Bremsscheibe gegeneinander verschieblich sind.

Das erfindungsgemäße Prinzip der unterschiedlichen Abstützung der felgenseitigen Bremsbacke und des felgenseitigen Sattelschenkels kann auch auf eine Bremsbacke angewendet werden, die mittels einer Druckplatte gegen eine Bremsscheibe gedrückt wird.

Die Erfindung ist daher auch auf eine Scheibenbremse mit einem Bremsträger, einer Bremsscheibe, einer Bremsbacke, einer die Bremsbacke gegen Mitdrehen mit der Bremsscheibe sichernden Eirichtung zum Abstützen der Bremsbacke an dem Bremsträger und einer Druckplatte zum Drücken der Bremsbacke gegen die Bremsscheibe anwendbar. Erfindungsgemäß ist dabei vorgesehen, daß die Bremsbacke und die Druckplatte gegeneinander in einer Ebene zur Bremsscheibe verschieblich sind und eine Drehsicherungseinrichtung für die Bremsbacke die Bremsbacke nur auf der Scheibenauslaufseite des Bremsträgers abstützt, wohingegen die Drehsicherungseinrichtung für die Druckplatte die Druckplatte nur auf der Scheibeneinlaufseite des Bremsträgers abstützt.

Nach einer besonders bevorzugten Ausführungsform der Erfindung stützt dabei eine Drehsicherungseinrichtung für eine felgenseitige Bremsbacke die felgenseitige Bremsbacke nur auf der Scheibenauslaufseite des Bremsträgers ab. Dabei wird wiederum davon ausgegangen, daß die felgenseitige Bremsbacke in geeigneter Weise "entkoppelt" ist.

Weiter ist es bevorzugt, daß mindestens eine Stützfläche der Drehsicherungseinrichtung der Druckplatte und/oder der betätigungsseitigen Bremsbacke zumindest teilweise gegenüber der Normalen auf die Bremsscheibe angestellt ist und somit entgegen einer bevorzugten Drehrichtung schräg verläuft. Dadurch wird eine Art Auflauframpe geschaffen. Diese Auflauframpe bewirkt bei einer Axialverschiebung der Druckplatte beziehungsweise der betätigungsseitigen Bremsbacke in Richtung der Bremsscheibenebene ein tangentiales Gegenmoment in der Drehsicherung. Dies bewirkt eine bessere Kraftverteilung im Sinne einer Pressungsverteilung zwischen der Scheibeneinlaufseite und der Scheibenauslaufseite und somit eine weitere Verringerung des Tangentialverschleißes.

Die Abstützfläche kann verschiedene Formen haben. Nach einer Ausführungsform der Erfindung ist sie ballig.

Die beiden Bremsbacken, der Sattel und gegebenenfalls die Druckplatte werden bei Betätigung der Bremse in Richtung axial zur Bremsscheibe verschoben. Um diese Verschieblichkeit nicht durch die jeweilige Abstützung an dem Bremsträger zu beeinträchtigen, kann erfindungsgemäß vorgesehen sein, daß die Drehsicherungseinrichtungen für die felgenseitige Bremsbacke, die betätigungsseitige Bremsbacke, den felgenseitigen Sattelschenkel und/oder die Druckplatte ein Anschlagspiel aufweisen. Dieses Anschlagspiel gewährleistet ein unbeeinträchtigtes Verschieben des jeweiligen Elementes gegen den Bremsträger zumindest bis zum Einsetzen der Bremsumfangkräfte, das heißt bis zum Anlegen der Bremsbeläge an der Bremsscheibe.

Das Maß der Verformung des Bremsträgers infolge der vom Bremsträger abgestützten Bremsumfangskräfte hängt von der Länge des Hebelarms bezüglich der Bremsscheibenachse ab. Das gilt ebenso für die Verformung der Halterung des Bremssattels an dem Bremsträger. Erfindungsgemäß bevorzugt ist es daher, daß die Drehsicherungen für die felgenseitige Bremsbacke, die betätigungsseitige Bremsbacke, den felgenseitigen Sattelschenkel und/oder die Druckplatte so angeordnet sind, daß der Hebelarm der Abstützkraft um die Drehachse der Bremsscheibe möglichst kurz ist.

Nach einer besonders bevorzugten Ausführungsform ist die Drehsicherungseinrichtung für den felgenseitigen Sattelschenkel in einer Ausnehmung in dem felgenseitigen Sattelschenkel angeordnet, deren Ausdehnung in Richtung axial zur Bremsscheibe eine entsprechende Verschiebung des Bremssattels bei der Betätigung der Bremse erlaubt. Unter "Ausnehmung" wird dabei eine taschenartige Vertiefung im Gegensatz zu einem Durchbruch verstanden. Dadurch wird der Bremssattel in seiner Steifigkeit an der entsprechenden Stelle nicht geschwächt.

Um Kerbwirkungen zu vermeiden, können dabei erfindungsgemäß Radien an den Rändern der Ausnehmung vorgesehen sein.

Schließlich ist erfindungsgemäß eine Bolzenführung zum verschieblichen Halten des Bremssattels an dem Bremsträger vorgesehen.

Nachstehend ist die Erfindung anhand eines bevorzugten Ausführungsbeispiels unter Bezugnahme auf die Zeichnung mit weiteren Einzelheiten näher erläutert. Dabei zeigen:
Fig. 1 eine teilweise geschnittene Draufsicht auf eine Gleitsattel-Scheibenbremse nach einem Ausführungsbeispiel der Erfindung,
Fig. 2 einen Schnitt zur Felgenseite entlang der Linie II-II in Fig. 1, jedoch ohne Bremsbacke,
Fig. 3 einen Schnitt zur Betätigungsseite entlang der Linie III-III in Fig. 1, jedoch ohne Bremssattel,
Fig. 3a eine Alternative zu der Ausführung nach Fig.3,
Fig. 3b eine Einzelheit aus Fig. 3a und
Fig. 4 die Abhängigkeit der Reibkraft zwischen Stützflächen an Drehsicherungseinrichtungen und der Bremsumfangskraft.

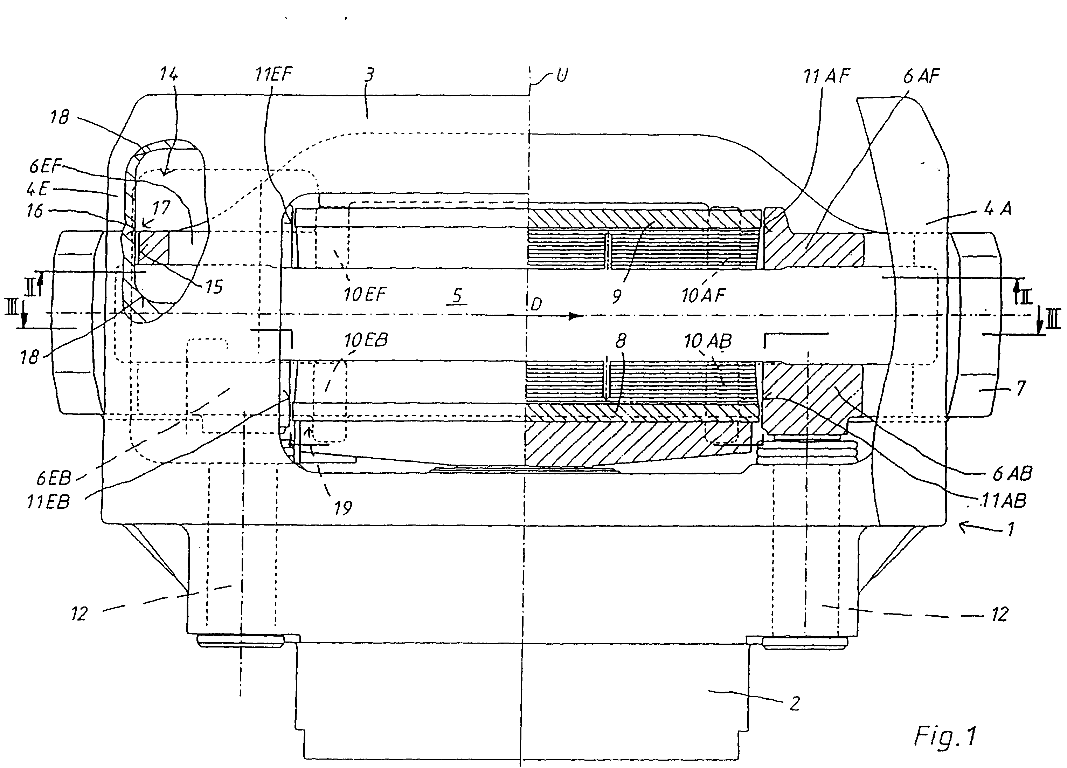

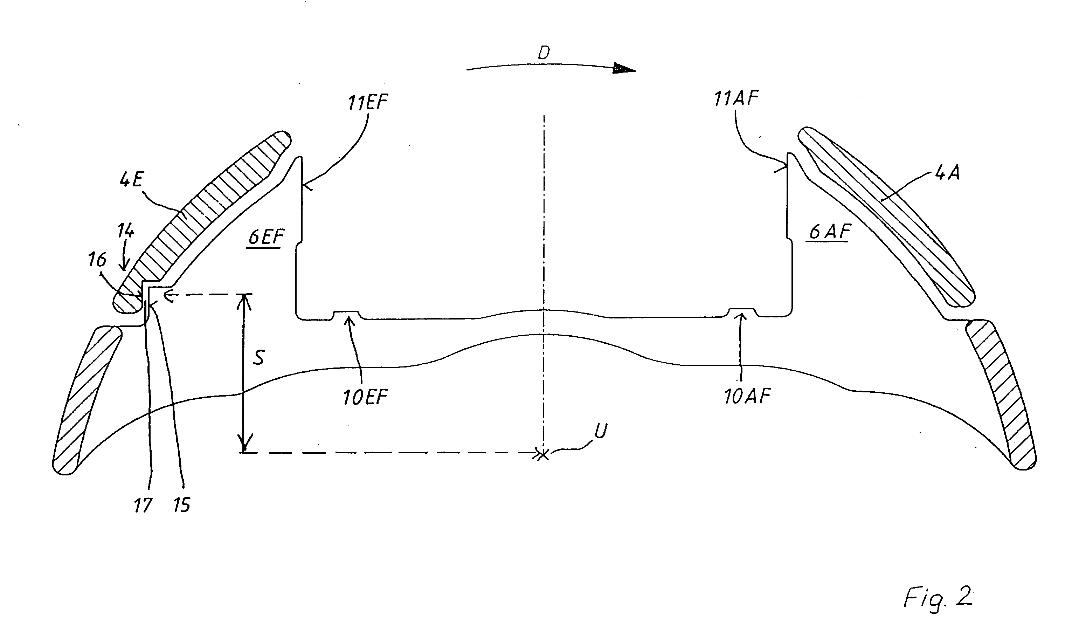

Die Fig. 1 bis 3 zeigen eine Gleitsattel-Scheibenbremse. Der Einfachheit halber sind bei mehrfach in der Bremse vorkommenden Elemente entsprechende Buchstaben in die Bezugszeichen einbezogen. Im einzelnen bedeuten: A = Auslaufseite der Bremsscheibe, E = Einlaufseite der Bremsscheibe, B = Betätigungsseite der Bremse, F = Felgenseite der Bremse. Die Buchstaben A und E beziehen sich dabei auf eine bevorzugte Drehrichtung D, anhand derer der Bremsaufbau nachfolgend erläutert wird.

Im einzelnen weist die Bremse einen Bremssattel 1 auf, der einen betätigungsseitigen Sattelschenkel 2 und einen felgenseitigen Sattelschenkel 3 hat. Die beiden Sattelschenkel 2 und 3 weisen verbindende Sattelbrücken 4E, 4A auf, die beidseitig einer Bremsscheibe 5 Trägerarme 6EB, 6EF, 6AB und 6AF eines am Fahrzeug ortsfest angebrachten Bremsträgers 7 übergreifen. Der Bremsträger 7 ist rahmenartig ausgeführt. Innerhalb des Bremsträgers 7 sind Bremsbacken 8, 9 auf radial inneren Leisten 10EB, 10EF, 10AB, 10AF geführt und entsprechend der Scheibendrehrichtung seitlich gegen Leisten 11EB, 11EF, 11AB, 11AF des Bremsträgers 7 abgestützt.

Mittels betätigungsseitig angeordneter Führungsbolzen 12 ist der Bremssattel 1 gegenüber dem ortsfesten Bremsträger 7 entlang einer Bremsenachse U axial verschieblich gehalten. Anstelle der Bolzenführung kann auch jede andere Halterung beziehungsweise Führung vorgesehen sein.

Zwischen der (nicht dargestellten) Betätigung und der betätigungsseitigen Bremsbacke 8 ist eine Druckplatte 13 axial verschieblich angeordnet. Je nach Bremsentyp kann die Druckplatte auch entfallen.

Die Bremse weist zur Vermeidung von Sattelschrägstellungen einen Abstützbereich 14 auf, der felgenseitig auf der Scheibeneinlaufseite zwischen dem felgenseitigen Sattelschenkel 3 und dem Trägerarm 6EF in einem relativ kurzen Abstand S bezogen auf die Bremsenachse U ausgebildet ist. Genauer gesagt liegt der Abstützbereich 14 in demjenigen Bereich des felgenseitigen Sattelschenkels 3, der der Sattelbrücke 4E zuzurechnen ist. Dieser Abstützbereich 14 beherbergt die oben erwähnte Drehsicherungseinrichtung für den felgenseitigen Sattelschenkel 3. Dazu ist am Trägerarm 6EF einerseits eine Stützfläche 15 und dieser zugewendet an der Sattelbrücke 4E andererseits eine Stützfläche 16 vorgesehen. Die Stützflächen 15, 16 sind mit einem Anschlagspiel 17 voneinander beabstandet. Dieses Anschlagspiel erfüllt eine sehr wichtige Funktion für die Leichtgängigkeit der Bremse und ist in der nachstehenden Funktionsbeschreibung noch im einzelnen erläutert. Die axiale Länge der Stützfläche 16 ermöglicht eine Sattelverschiebung infolge Belagverschleißes. Die Stützfläche 16 stellt den Boden einer sich über einen Teil der Sattelbrücke 4 erstreckenden Ausnehmung mit Radien 18 an den Enden dar. Mithin ist der Sattelschenkel 3 axial zur Felgenseite nicht mit Durchbrüchen versehen, wodurch die Steifigkeit des Sattelschenkels erhalten bleibt. Darüber hinaus werden durch die Radien 18 nachteilige Kerbwirkungen vermieden.

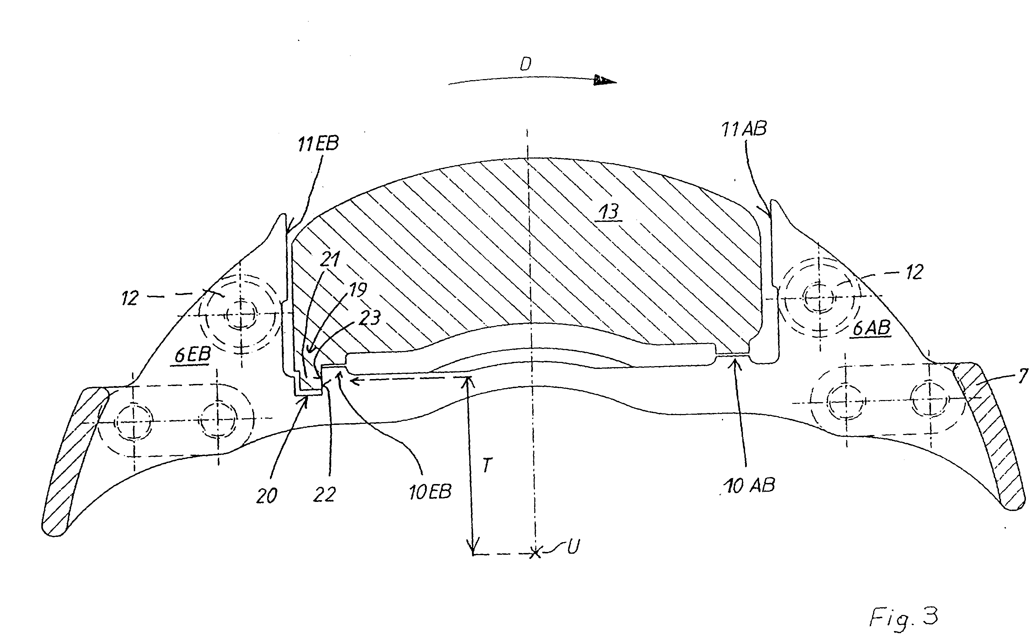

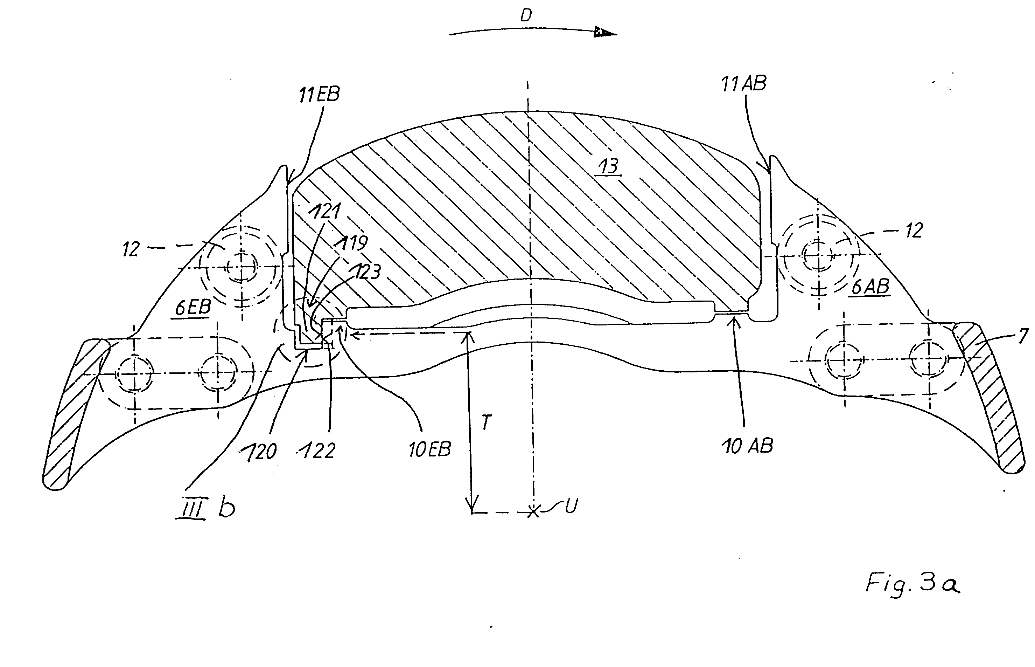

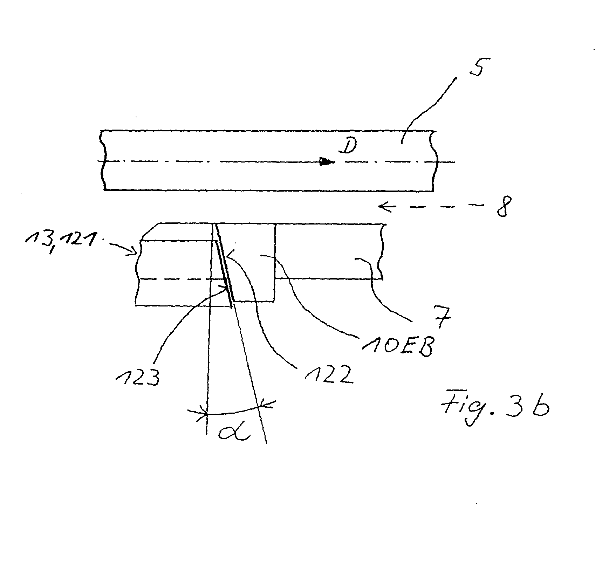

Gemäß Fig. 3 ist eine Drehsicherung 19 zum Sichern gegen ein Mitdrehen mit der Bremsscheibe 5 zwischen der Druckplatte 13 und der inneren Leiste 10EB des Bremsträgers 7 in einem relativ kurzen Abstand T zur Bremsenachse U scheibeneinlaufseitig vorgesehen. Dafür weist der Bremsträger 7 eine Ausnehmung 20 auf, in die ein Ansatz 21 der Druckplatte 13 eingreift. Die Elemente 20, 21 können auch umgekehrt an der Druckplatte 13 beziehungsweise dem Bremsträger 7 ausgebildet sind. Sie tragen Stützflächen 22 beziehungsweise 23. Zwischen den Stützflächen kann ebenfalls ein seitliches Anschlagspiel vorhanden sein.

Die Figuren 3a und 3b zeigen Alternativen zu der Ausgestaltung nach der Fig. 3.

Dabei weist eine an der Leiste 10EB des Bremsträgers 7 vorgesehene Drehsicherungseinrichtung 119 eine Stützfläche 122 auf, die bezogen auf die Normale auf die Bremsscheibe unter einem Winkel α angestellt und somit entgegen der bevorzugten Drehrichtung D schräg verläuft. Die zugeordnete Stützfläche 123 eines Ansatzes 121 der Druckplatte 13 verläuft ebenfalls unter diesem Winkel, so daß die Stützflächen 122, 123 zueinander annähernd parallel verlaufen. Um den Gleiteffekt zwischen der Druckplatte 13 und dem Bremsträger 7 in der Drehsicherungseinrichtung 119 beeinflussen zu können, können die Kontur und der Winkel einer der beiden Stützflächen 122, 123 zueinander beliebig, beispielsweise ballig ausgeführt sein.

Die von den beiden Stützflächen 122 und 123 gebildete Auflauframpe erzeugt bei einer Axialverschiebung der Druckplatte 13 in Richtung Bremsscheibenebene in der rungseinrichtung 119 ein tangentiales Gegenmoment. Der tialverschleiß wird dadurch weiter verringert.

Wie zu Beginn der Figurenbeschreibung ausgeführt, beziehen sich die Darstellungen sowie die zugehörigen Erläuterungen jeweils auf eine bevorzugte Drehrichtung D. Wird die Bremse jedoch bei (häufig) wechselnden Drehrichtungen eingesetzt, kann es ratsam oder gar erforderlich sein, die beschriebenen Drehsicherungseinrichtungen derart zu verdoppeln, daß sie auch in der anderen Drehrichtung wirksam sind. Wichtig ist jedoch immer, daß die Bremsbacken 8 und 9 nur auf der einen (Scheibenauslauf-) Seite und der Bremssattel 1 sowie die Druckplatte 13 auf der anderen (Scheibeneinlauf-) Seite abgestützt sind.

### Funktion

Wird die Bremse betätigt, erfolgt eine Verschiebung der betätigungsseitigen Bremsbacke 8 auf den Leisten 10EB, 10AB bis zur Anlage an der Bremsscheibe 5, wobei die einsetzende Umfangskraft die Bremsbacke 8 in Richtung D mitzieht und gegen die seitliche Leiste 11AB drückt. Gleichzeitig bewirkt die Reaktionskraft eine Verschiebung des Bremssattels 1 auf den Führungsbolzen 12 und ein Anlegen der felgenseitigen Bremsbacke 9 an der Bremsscheibe 5. Auch hier wird die Bremsbacke 9 mitgezogen und seitlich gegen die Stützleiste 11AF gedrückt.

Mit steigendem Bremsdruck und zunehmenden Umfangskräften neigt der felgenseitige Sattelschenkel 3 immer mehr dazu, dieser Bewegung durch eine Schrägstellung gegenüber dem Führungsbolzen 12 zu folgen. Daran ist er jedoch dadurch gehindert, daß sich nach Überwindung des Anschlagspiels 17 der felgenseitige Sattelschenkel 3 im Brückenbereich 4E "ziehend" mit einer Stützfläche 16 an der Stützfläche 15 des Trägerarms 6EF abstützt. Eine Sattelschrägstellung mit einseitiger Backenbelastung und dem daraus resultierenden tangentialen Schrägverschleiß wird somit wirkungsvoll begegnet.

Da zu Beginn des Bremsvorgangs noch das Anschlagspiel 17 vorhanden ist, tritt zwischen den Stützflächen 15, 16 auch noch keine Reibung auf. Die Betätigungskraft dient somit ausschließlich zur Sattelverschiebung. Demgegenüber erfordert eine formschlüssige Führung der oben erwähnten DE 27 50 337 C2 schon in dieser Betätigungsphase eine höhere Betätigungskraft, um die Reibkräfte bei der Sattelverschiebung zu überwinden. Dies würde sich aber insbesondere bei einer mit einer kraftabhängig arbeitenden Nachstellvorrichtung ausgestatteten Bremse nachteilig auswirken, weil die Nachstellung durch die ansteigende Betätigungskraft schon auskuppelt und den Nachstellschritt unterbricht, obwohl das Lüftspiel des felgenseitigen Bremsbelages noch gar nicht überwunden wurde. Zum anderen werden durch das Anschlagspiel unvermeidliche Herstellungstoleranzen ausgeglichen.

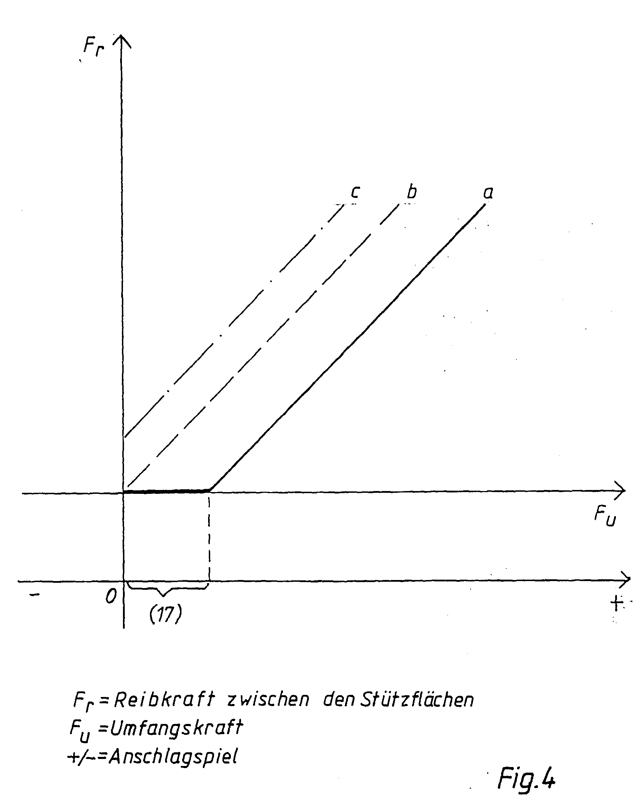

Fig. 4 zeigt die erforderlicher Betätigungskraft in Abhängigkeit von der Umfangskraft beziehungsweise vom Verschiebungsweg des Sattels. Dabei zeigt die Kurve (a) die Abhängigkeit unter dem Einfluß des Anschlagspiels 17, während die Kurve (b) die genannte Abhängigkeit bei einer formschlüssigen Führung zeigt, wie sie nach der DE 27 50 337 C2 vorgesehen ist. Der Kurvenverlauf (b) läßt erkennen, daß bereits im Leerhub für die Belaganlage wesentlich größere Bremskräfte zur Überwindung der Reibkräfte erforderlich sind, als dies unter dem Einfluß des Anschlagspiels 17 (Kurve (a)) der Fall ist. Die Reibkräfte steigen mit dem Einsetzen der Umfangskräfte während des Krafthubes noch an. Die Kurve (c) steht für den Fall von Minustoleranzen infolge beispielsweise von Herstellungsungenauigkeiten.

Analog ergeben sich die vorstehend beschriebenen Vorteile auch für die "gezogene" Druckplatte 13, wenn diese sich zunehmend mit ihrer Stützfläche 23 an der Stützfläche 22 abstützt. Diese Ausgestaltung wirkt im Sinne einer Drehsicherung, so daß über die axiale Zwangsführung der Druckplatte auch einem Drehen der Bremsbacke 8 entgegengewirkt wird und eine gleichmäßige Belaganlage zur Vermeidung eines tangentialen Schrägverschleißes verwirklicht wird.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. Dies gilt in besonderem Maße für die Ansprüche 6 und 7.

### Bezugszeichenliste

- 1: Bremssattel
- 2: betätigungsseitiger Sattelschenkel
- 3: felgenseitiger Sattelschenkel
- 4: Sattelbrücke
- 5: Bremsscheibe
- 6: Trägerarm
- 7: Bremsträger
- 8: betätigungsseitige Bremsbacke
- 9: felgenseitige Bremsbacke
- 10: Leiste
- 11: Leiste
- 12: Bolzen
- 13: Druckplatte
- 14: Abstützbereich
- 15: Stützfläche
- 16: Stützfläche
- 17: Anschlagspiel
- 18: Radius
- 19: Drehsicherung
- 20: Ausnehmung
- 21: Ansatz
- 22: Stützfläche
- 23: Stützfläche
- 119: Drehsicherung
- 121: Ansatz
- 122: Stützfläche
- 123: Stützfläche
- A: Auslaufseite der Bremsscheibe
- B: Betätigungsseite der Bremse
- E: Einlaufseite der Bremsscheibe
- F: Felgenseite der Bremse
- S: Hebelarm
- T: Hebelarm
- U: Bremsenachse
- α: Anstellwinkel

## Patentansprüche

1. Scheibenbremse mit einem Bremsträger (7), einer Bremsscheibe (5), einer betätigungsseitigen Bremsbacke (8), einer felgenseitigen Bremsbacke (9), einem in Richtung axial zur Bremsscheibe (5) verschieblich an dem Bremsträger (7) gehaltenen und die Bremsscheibe (5) mit einem felgenseitigen Sattelschenkel (3) übergreifenden Bremssattel (1), einer die felgenseitige Bremsbacke (9) gegen Mitdrehen mit der Bremsscheibe (5) sichernden Einrichtung (11AF) zum Abstützen der felgenseitigen Bremsbacke (9) an dem Bremsträger (7), einer die betätigungsseitige Bremsbacke (8) gegen Mitdrehen mit der Bremsscheibe (5) sichernden Einrichtung (11AB) zum Abstützen der betätigungsseitigen Bremsbacke (8) an dem Bremsträger (7) und einer den felgenseitigen Sattelschenkel (3) gegen Mitdrehen mit der Bremsscheibe (5) sichernden Einrichtung (15, 16) zum Abstützen des felgenseitigen Sattelschenkels (3) an dem Bremsträger (7), dadurch gekennzeichnet, daß die felgenseitige Bremsbacke (9) und der felgenseitige Sattelschenkel (3) gegeneinander in einer Ebene parallel zur Bremsscheibe (5) verschieblich sind und die Drehsicherungseinrichtung (11AF) für die felgenseitige Bremsbacke (9) die felgenseitige Bremsbacke (9) nur auf der Scheibenauslaufseite des Bremsträgers (7) abstützt, wohingegen die Drehsicherungseinrichtung (15, 16) für den felgenseitigen Sattelschenkel (3) den felgenseitigen Sattelschenkel (3) nur auf der Scheibeneinlaufseite des Bremsträgers (7) abstützt.

2. Scheibenbremse nach Anspruch 1, dadurch gekennzeichnet, daß die Drehsicherungseinrichtung (11AB) für die betätigungsseitige Bremsbacke (8) die betätigungsseitige Bremsbacke (8) nur auf der Scheibenauslaufseite des Bremsträgers (7) abstützt.

3. Scheibenbremse nach Anspruch 1 oder 2, gekennzeichnet durch eine Druckplatte (13) zum Drücken der betätigungsseitigen Bremsbacke (8) gegen die Bremsscheibe (5), wobei eine die Druckplatte (13) gegen Mitdrehen mit der Bremsscheibe (5) sichernde Einrichtung (19, 119) zum Abstützen der Druckplatte (13) an dem Bremsträger (7) vorgesehen ist und die Drehsicherungseinrichtung (19, 119) für die Druckplatte (13) die Druckplatte (13) nur auf der Scheibeneinlaufseite des Bremsträgers (7) abstützt.

4. Scheibenbremse nach Anspruch 3, dadurch gekennzeichnet, daß die Druckplatte (13) gegenüber der betätigungsseitigen Bremsbacke (8) in einer Ebene parallel zur Bremsscheibe (5) verschieblich ist.

5. Scheibenbremse nach Anspruch 4, dadurch gekennzeichnet, daß die Druckplatte (13) und die betätigungsseitige Bremsbacke (8) nicht in einer Ebene parallel zur Bremsscheibe (5) gegeneinander verschieblich sind.

6. Scheibenbremse mit einem Bremsträger (7), einer Bremsscheibe (5), einer Bremsbacke (8), einer die Bremsbacke (8) gegen Mitdrehen mit der Bremsscheibe (5) sichernden Einrichtung (11AB) zum Abstützen der Bremsbacke (8) an dem Bremsträger (7) und einer Druckplatte (13) zum Drücken der Bremsbacke (8) gegen die Bremsscheibe (5), dadurch gekennzeichnet, daß die Bremsbacke (8) und die Druckplatte (13) gegeneinander in einer Ebene parallel zur Bremsscheibe (5) verschieblich sind und eine Drehsicherungseinrichtung (11AB) für die Bremsbacke (8) die Bremsbacke (8) nur auf der Scheibenauslaufseite des Bremsträgers (7) abstützt, wohingegen die Drehsicherungseinrichtung (19, 119) für die Druckplatte (13) die Druckplatte (13) nur auf der Scheibeneinlaufseite des Bremsträgers (7) abstützt.

7. Scheibenbremse nach Anspruch 6, dadurch gekennzeichnet, daß eine Drehsicherungseinrichtung (11AF) für eine felgenseitige Bremsbacke (9) die felgenseitige Bremsbacke (9) nur auf der Scheibenauslaufseite des Bremsträgers (7) abstützt.

8. Scheibenbremse nach einem der vorangehenden Ansprüche, dadurch gekennzeichnet, daß mindestens eine Stützfläche (122, 123) der Drehsicherungseinrichtung (119; 10EB) der Druckplatte (13) und/oder der betätigungsseitigen Bremsbacke (8) zumindest teilweise gegenüber der Normalen auf die Bremsscheibe (5) angestellt ist und somit entgegen einer bevorzugten Drehrichtung (D) schräg verläuft.

9. Scheibenbremse nach Anspruch 7 oder 8, dadurch gekennzeichnet, daß die Stützfläche (122, 123) ballig ist.

10. Scheibenbremse nach einem der vorangehenden Ansprüche, dadurch gekennzeichnet, daß die Drehsicherungseinrichtung (11AF; 11AB; 15, 16; 19, 119) für die felgenseitige Bremsbacke (9), die betätigungsseitige Bremsbacke (8), den felgenseitigen Sattelschenkel (3) und/oder die Druckplatte (13) ein Anschlagspiel (17) aufweisen.

11. Scheibenbremse nach einem der vorangehenden Ansprüche, dadurch gekennzeichnet, daß die Drehsicherungen (11AF; 11AB; 15, 16; 19; 119) für die felgenseitige Bremsbacke (9), die betätigungsseitige Bremsbacke (8), den felgenseitigen Sattelschenkel (3) und/oder die Druckplatte (13) so angeordnet sind, daß der Hebelarm (S, T) der Abstützkraft um die Drehachse (U) der Bremsscheibe (5) möglichst kurz ist.

12. Scheibenbremse nach einem der Ansprüche 1 bis 5 und 8 bis 11, dadurch gekennzeichnet, daß die Drehsicherungseinrichtung (15, 16) für den felgenseitigen Sattelschenkel (3) in einer Ausnehmung (14) in dem felgenseitigen Sattelschenkel (3) angeordnet ist, deren Ausdehnung in Richtung axial zur Bremsscheibe (5) eine entsprechende Verschiebung des Bremssattels (1) bei der Betätigung der Bremse erlaubt.

13. Scheibenbremse nach Anspruch 12, gekennzeichnet durch Radien (18) an den Rändern der Ausnehmung (14).

14. Scheibenbremse nach einem der vorangehenden Ansprüche, gekennzeichnet durch eine Bolzenführung (12) zum verschieblichen Halten des Bremssattels (1) an dem Bremsträger (7).

## Claims

1. Disc brake with torque plate (7) a brake disc (5), a brake pad on the actuating unit side (8) and a brake pad on the wheel side (9), a brake caliper (1) with a leg on the wheel side (3) floating axially to the brake disc (5), a locking device (11AF) preventing the wheel side brake pad (9) from rotating with the brake disc (5) by anchoring the brake pad (8) on the actuating unit side against the torque plate (7) and a locking device (15, 16) to prevent the caliper leg (3) from rotating with the rake disc (5) by anchoring the caliper leg (3) against the torque plate (7), characterised by the wheel side brake pad (9) and the wheel side caliper leg (3) being allowed to float on a plane parallel to the brake disc (5) and that the locking device (11AF) for the wheel side brake pad (9) anchors the brake pad (9) only on the brake disc run out side against the torque plate (7), whereas the locking device (15, 16) for the caliper leg (3) only anchors the caliper leg (3) on the run-in side of the torque plate (7).

2. Disc brake according to claim 1, characterised by the locking device (11AB) for the brake pad (8) on the actuating unit side anchoring the brake pad (8) only on the brake disc run-out side against the torque plate (7).

3. Disc brake according to claim 1 or 2, characterised by a pressure plate (13) for pushing the brake pad (8) of the actuating unit side against the brake disc (5), whereby a locking device (19, 119) anchoring the pressure plate (13) against the torque plate (7) is utilised to prevent the pressure plate (13) from rotating with the brake disc (5) and that the locking device (19, 119) anchors the pressure plate (13) against the torque plate (7) only on the brake disc run-out side.

4. Disc brake according to claim 3, characterised by the pressure plate (13) opposite brake pad (8) on the actuating unit side, floating on a plane parallel to the brake disc (5).

5. Disc brake according to claim 4, characterised by the fact that the pressure plate (13) and the brake pad (8) on the actuating unit side do not float against each other parallel to the brake disc (5).

6. Disc brake with torque plate (7), a brake disc (5), a brake pad (8), a locking device (11AB) anchoring the brake pad (8) against the torque plate (7) thereby preventing it from rotating withe brake disc (5) and a pressure plate (13) to force the brake pad (8) against the brake disc (5), characterised by brake pad 8) and pressure plate (13) floating on one plane parallel to the brake disc (5) and a locking device (11AB) for the brake pad (8 anchoring the brake pad (8) only on the run-out side of the brake disc against the torque plate (7), whereas the locking device (19, 119) for the pressure plate (13) anchors the pressure plate (13) only on the brake disc run-in side of the torque plate (7).

7. Disc brake according to claim 6, characterised by a locking device (11AF) for the wheel side brake pad (9) anchoring the brake pad 9) against the torque plate (7) only on the brake disc run-out side.

8. Disc brake according to one of the above claims, characterised by a minimum of one abutment surface (1 2, 123) of the locking device (119, 10EB) for the pressure plate (13) and / or the brake pad (8) being positioned only partially against the normal plane surface of the brake disc (5) therefore running on an angle opposite the preferred direction (D) of travel.

9. Disc brake according to claim 7 or 8, characterised by the abutment surface (122, 123) being shaped sp erically.

10. Disc brake according to one of the above claims, characterised by the locking devices (11AF; 11AB; 15, 6; 19, 119) for the wheel side brake pad (9) the actuating unit side brake pad (8) the wheel side caliper leg (3) and / or the pressure plate (13) exhibiting an abutment gap (17).

11. Disc brake according to one of the above claims, characterised by the locking devices (11AF; 11AB; 15, 6; 19; 119) for the wheel side brake pad 9) the actuating unit side brake pad (8) the wheel side caliper leg (3) and / or the pressure plate (13) being positioned so that the lever arm (S, T) of the abutment force around the centre of rotation (U) of the brake disc is as short as possible.

12. Disc brake according to claims 1 to 5 and 8 to 11, characterised by the locking device (15, 16) for the wheel side caliper leg (3) being positioned axially to the brake disc (5) in an elongated recess (14) allowing corresponding movement of the brake caliper (1) upon brake actuation.

13. Disc brake according to claim 12, characterised by a recess (14) with radius edges (18).

14. Disc brake according to one of the above claims, characterised by a bolt guide (12) for mounting of the floating brake caliper (1) to the torque plate (7).

## Revendications

1. Frein à disque avec un support de frein (7), un disque de freinage (5), un segment de frein côté actionnement (8), un segment de frein côté jante (9), un étrier (1) retenu sur le support de frein (7) de façon déplaçable dans la direction axialement au disque de freinage (5) et passant sur le disque de freinage (5) par une branche d'étrier (3) côté jante, un dispositif (11AF) assurant le segment de frein côté jante (9) à l'encontre d'une rotation conjointement avec le disque de freinage (5), pour supporter le segment de frein côté jante (9) au support de frein (7), un dispositif (11AB) assurant le segment de frein côté actionnement (8) à l'encontre d'une rotation conjointement avec le disque de freinage (5), pour supporter le segment de frein côté actionnement (8) au support de frein (7) et un dispositif (15,16) assurant la branche d'étrier (3) coté jante à l'encontre d'une rotation conjointement avec le disque de freinage (5), pour supporter la branche d'étrier côté jante (3) sur le support de frein (7), caractérisé en ce que le segment de frein (9) côté jante et la branche d'étrier (3) côté jante sont déplaçables l'un contre l'autre dans un plan parallèlement au disque de freinage (5) et que le dispositif de sécurité empêchant une rotation (11AF) pour le segment de frein côté jante (9) supporte le segment de frein côté jante (9) seulement sur le côté sortie du disque du support de frein (7) tandis que le dispositif de sécurité empêchant une rotation (15,16) pour la branche d'étrier côté jante (3) supporte la branche d'étrier côté jante (3) seulement au côté d'entrée du disque du support de frein (7).

2. Frein à disque selon la revendication 1, caractérisé en ce que le dispositif de sécurité empêchant une rotation (11AB) pour le segment de frein côté actionnement (8) supporte le segment de frein côté actionnement (8) seulement au côté sortie du disque du support de frein (7).

3. Frein à disque selon la revendication 1 ou 2, caractérisé par une plaque de pression (13) pour pousser le segment de frein côté actionnement (8) contre le disque de freinage (5), où un dispositif (19, 119) empêchant une rotation de la plaque de pression (13) conjointement avec le disque de freinage (5) est prévu pour supporter la plaque de pression (13) au support de frein (7), et le dispositif de sécurité empêchant une rotation (19, 119) pour la plaque de pression (13) supporte la plaque de pression (13) seulement au côté entrée du disque du support de frein (7).

4. Frein à disque selon la revendication 3, caractérisé en ce que la plaque de pression (13) est déplaçable par rapport au segment de frein côté actionnement (8) dans un plan parallèlement au disque de freinage (5) .

5. Frein à disque selon la revendication 4, caractérisé en ce que la plaque de pression (13) et le segment de frein côté actionnement (8) ne sont pas déplaçables l'un contre l'autre dans un plan parallèlement au disque de freinage (5).

6. Frein à disque comportant un support de frein (7), un disque de freinage (5), un segment de frein (8), un dispositif (11AB) assurant le segment de frein (8) à l'encontre d'une rotation conjointement avec le disque de freinage (5), pour supporter le segment de frein (8) au support de frein (7) et une plaque de pression (13) pour pousser le segment de frein (8) contre le disque de freinage (5), caractérisé en ce que le segment de frein (8) et la plaque de pression (13) sont déplaçables l'un contre l'autre dans un plan parallèlement au disque de freinage (5) et qu'un dispositif de sécurité empêchant une rotation (11AB) pour le segment de frein (8) supporte le segment de frein (8) seulement au côté sortie du disque du support de frein (7), tandis que le dispositif de sécurité empêchant une rotation (19, 119) pour la plaque de pression (13) supporte la plaque de pression (13) seulement au côté entrée du disque du support de frein (7).

7. Frein à disque selon la revendication 6, caractérisé en ce qu'un dispositif de sécurité empêchant une rotation (11AF) pour un segment de frein côté jante (9) supporte le segment de frein côté jante (9) seulement au côté sortie du disque du support de frein (7).

8. Frein à disque selon l'une des revendications précédentes, caractérisé en ce qu'au moins une surface d'appui (122, 123) du dispositif de sécurité empêchant une rotation (119; 10EB) de la plaque de pression (13) et/ou du segment de frein côté actionnement (8) est inclinée au moins partiellement par rapport à la normale sur le disque de freinage (5) et s'étend donc en biais contre une direction de rotation préférée (D).

9. Frein à disque selon la revendication 7 ou 8, caractérisé en ce que la surface d'appui (122, 123) est convexe.

10. Frein à disque selon l'une des revendications précédentes, caractérisé en ce que le dispositif de sécurité empêchant une rotation (11AF; 11AB; 15, 16; 19, 119) pour le segment de frein côté jante (9), le segment de frein côté actionnement (8), la branche d'étrier côté jante (3) et /ou la plaque de pression (13) présentent un jeu de butée (17).

11. Frein à disque selon l'une des revendications précédentes, caractérisé en ce que les sécurités empêchant une rotation (11AF; 11AB; 15, 16; 19, 119) pour le segment de frein côté jante (9), le segment de frein côté actionnement (8), la branche d'étrier côté jante (3) et/ou la plaque de pression (13) sont disposées de telle sorte que le bras de puissance (S, T) de la force d'appui autour de l'axe de rotation (U) du disque de freinage (5) soit le plus court possible.

12. Frein à disque selon l'une des revendications 1 à 5 et 8 à 11, caractérisé en ce que le dispositif de sécurité empêchant une rotation (15, 16) pour la branche d'étrier côté jante (3) est disposé dans un évidement (14) dans la branche d'étrier côté jante (3), dont l'extension dans la direction axialement au disque de freinage (5) permet un déplacement correspondant de l'étrier (1) lors de l'actionnement du frein.

13. Frein à disque selon la revendication 12, caractérisé par des rayons (18) aux bords de l'évidement (14).

14. Frein à disque selon l'une des revendications précédentes, caractérisé par un guidage de boulon (12) pour retenir de façon déplaçable l'étrier (1) au support de frein (7).
